# EUROPÄISCHE PATENTANMELDUNG

(11) **EP 0 705 860 A2**
(43) Veröffentlichungstag der Anmeldung: **10.04.1996**
(21) Anmeldenummer: 95115036.6
(22) Anmeldetag: 25.09.1995
(51) Int. Cl.: C08G 69/28, C08G 69/32

(54) **Verfahren zur Herstellung von stickstoffhaltigen Polymeren**

(30) Priorität: 07.10.1994 DE 4435873
(71) Anmelder: HOECHST AKTIENGESELLSCHAFT, D-65929 Frankfurt am Main (DE)
(72) Erfinder: Henze, Andree, Dr., D-65719 Hofheim (DE); Calundann, Gordon, Dr., North Plainfield, N.J. 07060 (US)

(57) **Zusammenfassung**

Zur Herstellung von stickstoffhaltigen aromatischen Polymeren, z. B. Polyamiden, Polyimiden und Polybenzimidazolen, werden mehrwertige aromatische Carbonsäuren und aromatische Diamine und/oder Aminocarbonsäuren oder deren reaktive Derivate in einem hochsiedenden inerten Lösungsmittel unter Zusatz eines temperaturbeständigen Dispergierhilfsmittels umgesetzt und dabei entstehende flüchtige Nebenprodukte abdestilliert. Nach Beendigung der Reaktion wird der Ansatz abgekühlt und das entstehende Polymer abfiltriert.

## Beschreibung

Die vorliegende Erfindung betrifft ein Verfahren zur Herstellung von aromatischen Polyamiden, Polyamidimiden, Polyimiden und Polybenzimidazolen in nicht-wäßrigen Dispersionen.
Die ausgezeichneten Eigenschaften der aromatischen Polyamide, Polyimide und Polyamid-imide und Polybenzimidazole sind seit längerem bekannt.
Hervorzuheben sind insbesondere ihre hervorragende Temperaturstabilität und ihre guten mechanischen Eigenschaften.

Die für aliphatische Polyamide bekannten Verfahren lassen sich nicht ohne weiteres auf aromatische Polyamide übertragen, weil die Reaktivität aromatischer Diamine geringer ist als die aliphatischer Diamine. Eine Direktkondensation von aromatischen Diaminen mit aromatischen Dicarbonsäuren ist nur unter Katalysatorensatz (DE 3.942.941) möglich.
Nachteile sind hier Katalysatorspuren im Polykondensat (Dialkylaminopyridine oder/und Phosphonsäuren) und die Oxydationsempfindlichkeit aromatischer Diamine bei höheren Temperaturen.

Aromatische Polyamide lassen sich herstellen durch Polykondensation von aktivierten aromatischen Diaminen, vorzugsweise der acetylierten Diamine, mit aromatischen Dicarbonsäuren in der Schmelze bei 220°C - 360°C (US 4.758.651). Auch die Verwendung aktivierter Derivate der aromatischen Dicarbonsäuren, vorzugsweise der Phenylester, ist möglich. Voraussetzung bei den beschriebenen Verfahren ist jedoch, daß die entstehenden Polyamide bei der Reaktionstemperatur eine hinreichend niedrige Schmelzviskosität aufweisen. Da die meisten aromatischen Polyamide unter Polykondensationsbedingungen eine sehr hohe Schmelzviskosität aufweisen oder hochkristallin sind, sind diese Verfahren nicht auf alle aromatischen Polyamide anwendbar und die erreichbaren Molmassen sind limitiert.

Zur Herstellung von aromatischen Polyimiden existieren mehrere Verfahren. Durch Umsetzung von Tetracarbonsäureanhydriden und Diaminen in einem dipolar-aprotischen Lösungsmittel bei 0°C bis 150°C entstehen Polyamidcarbonsäuren, die anschließend durch Imidisierung in das Polyimid umgewandelt werden. Die Wasserabspaltung geschieht entweder in Lösung unter Einsatz Wasser entziehender Mittel oder in Substanz durch Erhitzen.

Nachteilig ist dabei die schlechte Raum-Zeit-Ausbeute und die umständliche Isolierung der Polymeren.
Polyimide, die bei der Reaktionstemperatur (knapp unterhalb der thermischen Zersetzungsgrenze) eine hinreichend kleine Schmelzviskosität aufweisen, können auch in einer direkten Schmelzreaktion bei 150°C - 380°C aus aromatischen Diaminen und Tetracarbonsäureanhydriden erhalten werden. Polymere mit sehr hohen Schmelz-Viskositäten können nach diesem Verfahren nicht hergestellt werden.
Polybenzimidazole werden im allgemeinen hergestellt durch Umsetzung von aromatischen Dicarbonsäuren oder deren Phenylester mit aromatischen Tetraaminen. Im allgemeinen wird eine Schmelzkondensation der Monomere durchgeführt, bis die Schmelze erstarrt, diese wird dann abgekühlt und pulverisiert und in einem 2.Schritt bei Temperaturen bis 400°C feststoffkondensiert (US. 3.174.974). Nachteil ist hier die zweistufige Durchführung der Synthese. Auch eine Durchführung der Reaktion als Fällungskondensation in hochsiedenen Lösungsmitteln wie Diphenylsulfon ist beschrieben (US. 3.784.517). Hier ist jedoch der Polymeranteil im Lösungsmittel begrenzt durch die Löslichkeit der Monomere im hochsiedeneden Lösungsmittel.
Um diese Nachteile zu umgehen, hat man bereits versucht, die Polykondensationen in nicht-wäßrigen Dispersionen durchzuführen.
In der DE-OS 2707491 wird ein Verfahren zur Herstellung stabiler Dispersionen von Polymerpartikeln beschrieben, bei dem man monomere Ausgangsprodukte in Gegenwart eines festen Modifizierungsmittels, beispielsweise feinverteiltem Titanoxid, und in Gegenwart eines Stabilisierungsmittels, z.B. eines Blockcopolymers mit einem Gehalt an 12-Hydroxy-Stearinsäure, in einem hochsiedenden Kohlenwasserstoff umsetzt. Die Herstellung von Polyurethanen, Polyamiden, Polyestern und Polyesteramiden wird beschrieben. Rein aromatische Polyamide werden nicht erwähnt.

Gemäß EP 306165 werden Dispersionen von hochmolekularen Polyamiden in einem Kohlenwasserstoff durch Polykondensation von Nylonsalzen in Gegenwart eines Hypophosphit-Katalysators hergestellt. Die Bereitung der Nylonsalze erfolgt durch Umsetzung aliphatischer, alicyclischer oder aromatischer Dicarbonsäuren mit aliphatischen, alicyclischen oder aromatischen Diaminen. Weder das eingesetzte Nylonsalz, noch das erzeugte Polyamid soll unter den Reaktionsbedingungen schmelzen. Daher werden auch Dispergierhilfsmittel zugesetzt.

Gemäß JP 01129024 A2 werden Kristalle aus relativ niedrig molekularem Polyphenylenterephthalamid durch Polykondensation von p-Phenylendiamin mit Diphenyldithioterephthalate in hochsiedenden Kohlenwasserstoffen hergestellt.
Dispergierhilfsmittel werden nicht zugesetzt.

Schließlich beschreibt EP 0275164 die Herstellung von vollaromatischen, in der Schmelze flüssigkristallinen Polyestern durch Polykondensation von acetylierten Diolen oder Hydroxycarbonsäuren oder deren Gemischen mit Dicarbonsäuren, wobei die Ausgangsprodukte in einem hochsiedenden Öl dispergiert werden.

Das Verfahren der Dispersions- Polykondensation bei hohen Temperaturen in einem inerten Medium, in dem sowohl das Polymer als auch die Monomere unlöslich sind, ist also im Prinzip bekannt. Die Variante mit Dispergierhilfsstoffen wurde bisher jedoch nicht auf stickstoffhaltige Polymere ausgedehnt.

Es bestand daher die Aufgabe, stickstoffhaltige Polymere, insbesondere Polyamide und Polyimide, die sich von aromatischen mehrwertigen Diaminen und aromatischen Polycarbonsäuren ableiten und ein besonders großes Molekulargewicht und/oder eine sehr enge Molekulargewichtsverteilung aufweisen, herzustellen.

Es wurde nun ein Verfahren zur Herstellung von stickstoffhaltigen Polymeren gefunden, wobei man mehrwertige Carbonsäuren und mehrwertige Diamine und/oder Aminocarbonsäuren oder deren reaktive Derivate in einem hochsiedenden inerten Lösungsmittel unter Zusatz eines temperaturbeständigen Dispergierhilfsmittels umsetzt, man dabei entstehende flüchtige Nebenprodukte abdestilliert, man nach Beendigung der Reaktion den Ansatz abkühlt und das entstehende Polymer abfiltriert. Das Verfahren ist dadurch gekennzeichnet, daß man aromatische Ausgangsprodukte einsetzt. Katalysatoren werden nicht benötigt.

Das erfindungsgemäße Verfahren ist insbesondere zur Herstellung von Polymeren geeignet, die eine Glasübergangstemperatur von mindestens 200°C besitzen und/oder deren kristalliner Schmelzpunkt so hoch ist, daß er die Reaktionstemperatur überschreitet.

Das erfindungsgemäße Verfahren eignet sich insbesondere zur Herstellung von aromatischen Polyamiden. Dabei wird eine aromatische Dicarbonsäure oder ein aromatischer Dicarbonsäureester, z.B. einen Phenylester oder Thiophenylester, mit einem aromatischen Diamin oder dessen N-Acylderivat, insbesondere dem Acetylderivat, gegebenenfalls unter Zusatz von aromatischen Aminocarbonsäuren umgesetzt und das entstehende Polyamid isoliert.
Zur Herstellung aromatischer Polyamide werden vorzugsweise die Dicarbonsäuren Terephthalsäure, Isophthalsäure, die Diphenyletherdicarbonsäuren, Biphenyldicarbonsäuren oder 1.4- oder 2.6-Naphthalindicarbonsäuren eingesetzt. Aromatische Aminocarbonsäuren, wie Aminophenoxybenzoesäuren oder die Aminobenzoesäuren können dem Ansatz zugefügt oder auch in Abwesenheit von Dicarbonsäuren und Diaminen umgesetzt werden.

Als aromatische Diamine werden insbesondere solche der folgenden Struktur eingesetzt: 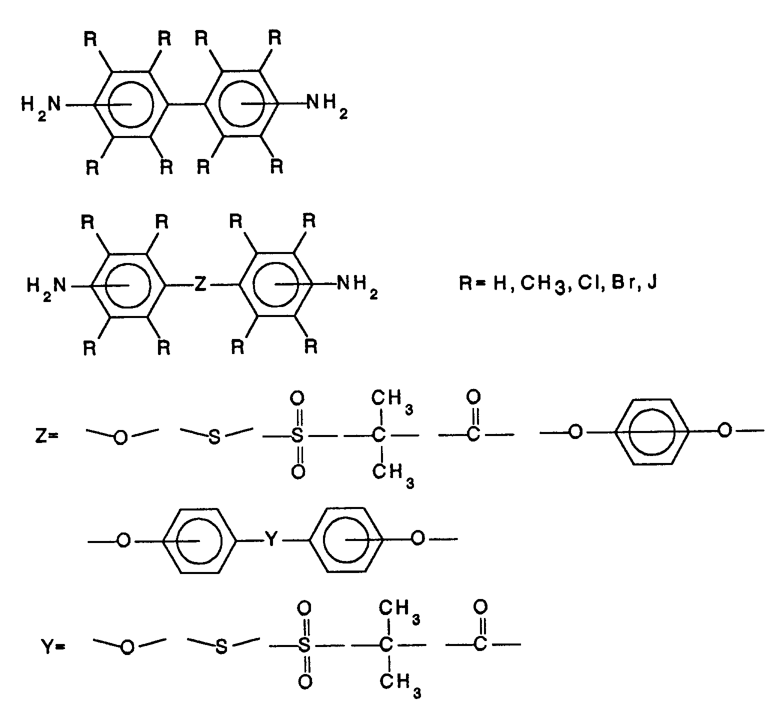
sowie p-, m-, o- Phenylendiamin.

Das erfindungsgemäße Verfahren eignet sich auch zur Herstellung von aromatischen Polyimiden. Dabei wird eine aromatische Tetracarbonsäure oder deren Anhydrid mit einem aromatischen Diamin oder dessen N-Acylderivat umgesetzt und das entstandene Polyimid vom Reaktionsansatz abfiltriert. Eingesetzt wird beispielsweise Pyromellitsäureanhydrid oder Tetracarbonsäureanhydride der folgenden Struktur. 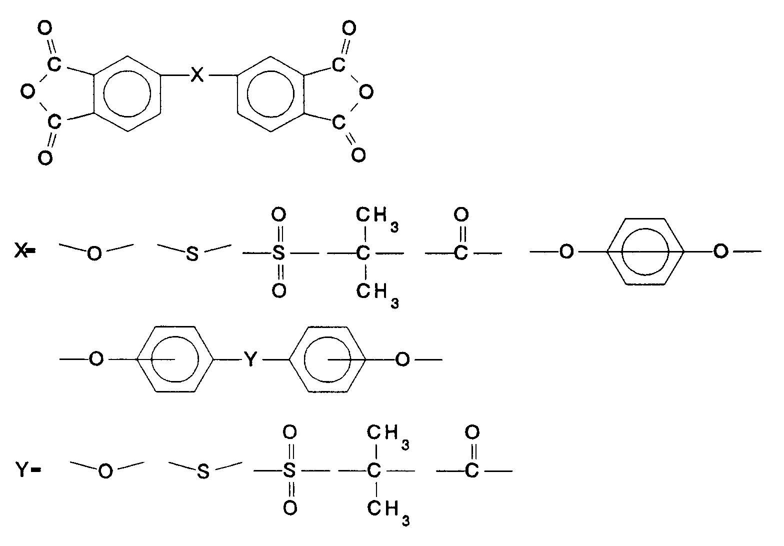
Es können auch die freien Tetracarbonsäuren oder Gemische dieser Verbindungen verwendet werden. Die Reaktionstemperatur beträgt zunächst 150-300°C und gegen Ende der Reaktion 230-340°C.

Das erfindungsgemäße Verfahren ist auch anwendbar zur Herstellung von Polybenzimidazolen. Dabei wird eine aromatische Dicarbonsäure oder deren Phenylester mit einem aromatischen Tetraamin umgesetzt und das entstehende Polybenzimidazol durch Filtration isoliert. Die Reaktionstemperatur beträgt zunächst 180-300°C, gegen Ende der Reaktion 370°C. Die Tetraamine haben folgende Struktur:

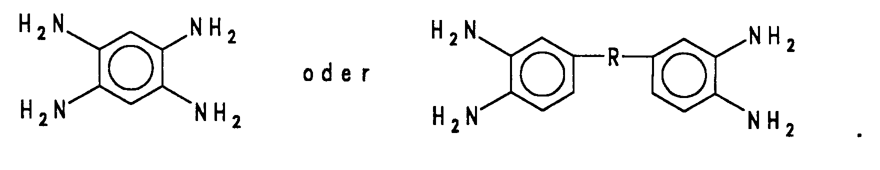

Dabei ist R ein zweiwertiger Rest, z.B. eine einfache Bindung oder

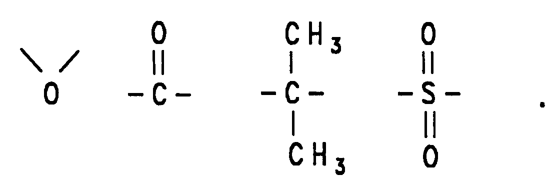

Typische Dicarbonsäuren sind Isophthalsäure, Terephthalsäure, 1,4-Naphthalindicarbonsäure, 1,6 Naphthalindicarbonsäure und 4,4'Dicarboxybiphenyl oder deren Phenylester. Bei Einsatz der freien Dicarbonsäuren werden 0,5 - 2 Gew.-% Katalysatoren wie Triphenylphosphin, Dichlorphenylphosphin, Chlordiphenylphosphin, Triphenylphosphit oder andere Katalysatoren vom Phosphin- oder Phosphit-Typ verwendet.

Das erfindungsgemäße Verfahren eignet sich schließlich zur Herstellung von aromatischen Polyamidimiden. Dazu wird ein aromatisches Tricarbonsäureanhydrid (z.B. Trimellitsäureanhydrid) mit einem aromatischen Diamin oder dessen Acylderivat umgesetzt und schließlich das entstehende Polymere abfiltriert. Die Bildung der Polyamidsäure erfolgt bei 150-300°C, die Bildung des Polyamidimids bei 230 - 340°C.
Die erwähnten Monomere können einzeln oder als Gemisch eingesetzt werden, unter der Bedingung, daß die Äquivalenz der funktionellen Gruppen gewahrt bleibt. Zum Zweck der Molmassenbegrenzung kann man jedoch auch bis zu 10 Mol-% (bezogen auf die Mengen der Säuren oder der Diamine) einer monofunktionellen Substanz dem Ansatz hinzufügen, d.h. von der Äquivalenz der funktionellen Gruppen abweichen.

Als hochsiedende inerte Lösungsmittel werden insbesondere hochsiedende Kohlenwasserstoffgemische eingesetzt. Verwendbar ist aber auch jedes andere inerte Reaktionsmedium, das einen hinreichend hohen Siedepunkt besitzt, das synthetisierte Polymer nicht löst und keine Nebenreaktionen mit dem Monomeren oder dem Polymer eingeht.
Besonders bevorzugt sind solche Lösungsmittel, die mit dem in der Polykondensation entstehenden niedermolekularen Nebenprodukt ein Azeotrop bilden und dieses dadurch sehr effektiv aus dem Reaktionssystem durch Destillation entfernen.

Beispiele für derartige inerte Lösungsmittel sind:
a) hydrogenierte Terphenyle, Handelsnamen ®"Santotherm", (Fa. Monsanto)
b) Triaryldimethane unter dem Handelsnamen ®"Marlotherm" (Hüls AG)
c) jedes hochsiedende Kohlenwasserstoffgemisch, beispielsweise "Therminol E" (Shell AG)
d) Gemische oligomerer Fluorverbindungen, beispielsweise ®"Hostinert" der Hoechst AG
und Gemische dieser Lösungsmittel untereinander.

Die zugesetzten Dispergierhilfsmittel sollen im gesamten Temperaturbereich der Reaktion verhindern, daß sich Aggregate der Monomerteilchen und der Polymerteilchen größer als 100 µm bilden. Im allgemeinen wird man dem Ansatz 1-50 Gew.-% (bezogen auf das Dispergiermedium) Dispergierhilfsmittel zusetzen, um stabile Dispersionen zu erreichen. Bevorzugt sind Mengen von 1-10 Gew.-% und insbesondere 2-4 Gew.-%. Die Dispergierhilfsmittel sollen keine funktionellen Gruppen besitzen, die mit den Monomeren reagieren und dadurch die Polykondensation beeinträchtigen. Insbesondere unerwünscht ist eine Verschiebung der Äquivalenz der funktionellen Gruppen durch das Dispergierhilfsmittel, was zu einer Depression des maximal erreichbaren Polykondensationsgrades führen würde. Selbstverständlich müssen die Dispergierhilfsmittel unter den Bedingungen der Polykondensation hinreichend thermisch stabil sein, da Abbauprodukte zu einer Verschlechterung der Eigenschaften der Polykondensate führen könnten und die stabilisierende Wirkung auf die Dispersion verringert wird.

Die stabilisierende Wirkung der Dispergierhilfsmittel kann -je nach deren Aufbaudarauf beruhen, daß die Viskosität des inerten Lösungsmittels im Bereich der Polykondensationsreaktion erhöht wird (Beispiel: ®Bentone 38 der Rheox Inc.).
Die stabilisierende Wirkung kann auch darauf beruhen, daß die Dispergierhilfsmittel einen amphiphilen Charakter besitzen, d.h. einige funktionelle Gruppen des Dispergierhilfsmittels weisen eine hohe Affinität zum inerten (meist unpolaren) Lösungsmittel, andere funktionelle Gruppen wiederum zum Polykondensat auf. Dies führt zu einer Anreicherung der Dispergierhilfsmittel an der Grenzschicht zwischen Polykondensat und inertem Lösungsmittel. Beispiele für solche Stoffe sind Blockcopolymere und Polymere, insbesondere aus polaren und unpolaren Monomeren, beispielsweise die unter dem Handelsnamen ®"Surlyn" erhältlichen Copolymere der Firma DuPont. Zu dieser Gruppe gehören aber auch niedermolekulare amphiphile Verbindungen, wie z. B. Tenside. Beispielsweise besitzen Pyrrolidone mit langkettigen N-Alkylgruppen, z.B. mit C₆-C₂₆-Alkylgruppen, insbesondere mit C₉-C₂₂-Alkylgruppen, einerseits eine große Affinität zum unpolaren inerten Lösungsmittel sowie eine große Affinität zum Monomer oder Polymer. Die stabilisierende Wirkung der Dispergierhilfsmittel kann ferner darauf beruhen, daß sie die Oberflächenspannung der dispergierten Monomer- und Polymerteilchen verändern.
Der Einsatz von hydrophob behandelten Tonmineralien, wie Bentone 38, zur Herstellung von aliphatischen Polyamiden und flüssigkristallinen aromatischen Polyestern, ist aus EP 0 275 163 bekannt.
Es ist auch möglich, mehrere Dispergierhilfsmittel gleichzeitig einzusetzen, von denen beispielsweise eine Komponente die Dispersion der Monomeren stabilisiert, die andere Komponente eine stabilisierende Wirkung auf die Polymerdispersion ausübt.

Das erfindungsgemäße Verfahren überwindet die eingangs erwähnten Probleme der hohen Viskosität bei Schmelzverfahren oder der Kristallinität der Polymere bei Polykondensationstemperatur, welche die Wirksamkeit einer Schmelzpolykondensation oder Polykondensation in Substanz begrenzt haben.
Ursache für das sehr vorteilhafte Ablaufen des erfindungsgemäßen Verfahrens, dürfte dabei die große spezifische Oberfläche der dispergierten Polymerteilchen und die effektive Entfernung von Nebenprodukten der Polykondensation durch Abdestillieren, insbesondere unter Bildung eines Azeotrops dieser Nebenprodukte mit dem inerten Lösungsmittel, sein. Überraschenderweise ist es für das Verfahren gleichgültig, ob das Polykondensat hochkristallin, teilkristallin oder amorph ist. Ferner ist überraschend, daß man mit dem erfindungsgemäßen Verfahren Produkte mit hohem Molekulargewicht erhält, obwohl die aromatischen Kettenglieder nur eine geringere Kettenmobilität zulassen.

Die Erfindung wird durch die folgenden Beispiele näher erläutert.

### Beispiel 1 (amorphes Polyamid):

In einem 2l Dreihalskolben mit Stickstoffeinleitung, Rührer, Innenthermometer und Tropftrichter werden 71,84g (= 0,175 mol) 2,2-Bis(4-(4-aminophenoxy)phenyl)propan (= BAB) durch mehrmaliges Evakuieren und Wiederbelüften mit Stickstoff unter Stickstoffatmosphäre gesetzt. Der Kolbeninhalt wird aufgeschmolzen und bei ca. 140°C durch Zutropfen von 0,35 mol (34,2 ml ) Essigsäureanhydrid acetyliert.
Eine Destillationsbrücke wird aufgesetzt und die entstehende Essigsäure wird anschließend abdestilliert. Der Kolben enthält jetzt insgesamt 86,55 g der acetylierten Verbindung.

Es werden 23,25g Terephthalsäure (0,14 mol) und 5,815g (0,035 mol) Isophthalsäure zugesetzt (Gesamtmenge Monomere = 115,6 g).
Während der Destillation werden 400 g Santotherm mit 18,6 g ®Bentone 38 (4% bezogen auf Gesamtmenge Santotherm) mit einem Dispergator gemischt.
Nach 10 min werden 6,15 g (5,16 ml) Propylencarbonat (33 % bezogen auf Bentone 38) dazugegeben, um die Scherwirkung auf das Bentone 38 zu verbessern und die Viskosität des Santotherm/Bentone 38-Gemisches zu erhöhen.

Diese Mischung wird langsam zu den 230°C heißen Monomeren gegeben. Der Mischer wird mit 66 g Santotherm gespült und diese werden ebenfalls zum Reaktionsansatz gegeben.
Die Temperatur wird unter möglichst starkem Rühren auf am Schluß 280°C erhöht. Die Gesamtreaktionszeit beträgt 8h.
Nach Beendigung der Kondensation wird unter Rühren (mindestens bis Verfestigung der dispergierten Teilchen eingetreten ist) abgekühlt und der Reaktionsansatz filtriert, mit Toluol gewaschen (im Mixer) und getrocknet.

Man erhält 94 g eines hellbeigen Pulvers mit einem Staudinger-Index von 0,7 dl/g (in NMP bei 25°C) und einer Glasübergangstemperatur von 220°C. Die mittlere Korngröße beträgt 50 µm.

### Beispiel 2 (teilkristallines Aramid):

In einem 1l Dreihalskolben mit Stickstoffeinleitung, Rührer, Innenthermometer und Tropftrichter werden 143,7 g (= 0,35 mol) BAB und 5,33 g (0,039 mol) p-Aminobenzoesäure durch mehrmaliges Evakuieren und Wiederbelüften mit Stickstoff unter Stickstoffatmosphäre gesetzt. Der Kolbeninhalt wird aufgeschmolzen und bei ca. 140°C acetyliert durch Zutropfen von 0,74 mol (70 ml) Essigsäureanhydrid.
Eine Destillationsbrücke wird aufgesetzt und die entstehende Essigsäure wird anschließend abdestilliert. Der Kolben enthält jetzt insgesamt 180,1 g der acetylierten Verbindungen.
Es werden 58,15 g (0,35 mol) Terephthalsäure zugesetzt (Gesamtmenge Monomere = 238,25 g).
Während der Destillation werden 400 g Santotherm mit 14,3 g Bentone 38 (3% bezogen auf Gesamtmenge Santhotherm) mit einem Dispergator gemischt. Nach 10 min werden 4,71 g (4 ml) Propylencarbonat (33 % bezogen auf Bentone 38) dazugegeben.

Diese Mischung wird langsam zu den 230°C heißen, acetylierten Verbindungen gegeben. Der Mischer wird mit 76,5 g Santotherm gespült und diese werden ebenfalls zum Reaktionsansatz gegeben.
Die Temperatur wird unter möglichst starkem Rühren auf am Schluß 280°C erhöht. Dabei destilliert weitere Essigsäure.
Nach Beendigung der Kondensation wird unter Rühren (mindestens bis Verfestigung der dispergierten Teilchen eingetreten ist) abgekühlt und der Reaktionsansatz filtriert, mit Toluol gewaschen (im Mixer) und getrocknet.

Man erhält 205 g eines hellbeigen Pulvers vom Staudinger-Index 0,6 dl/g. Der Glasübergang des Polymeren liegt bei 215°C, der kristalline Schmelzpunkt bei 328°C.

### Beispiel 3 (Polyamid- Imid):

In einem 2l Dreihalskolben mit Stickstoffeinleitung, Rührer, Innenthermometer und Tropftrichter werden 143,7 g (=0,35 mol) BAB durch mehrmaliges Evakuieren und Wiederbelüften mit Stickstoff unter Stickstoffatmosphäre gesetzt. Der Kolbeninhalt wird aufgeschmolzen und bei ca. 140°C durch Zutropfen von 0,725 mol (68,4 ml) Essigsäureanhydrid acetyliert.
Eine Destillationsbrücke wird aufgesetzt und die entstehende Essigsäure wird anschließend abdestilliert. Der Kolben enthält jetzt insgesamt 173,1 g der acetylierten Verbindungen.

Während der Destillation werden in einem Mischer 850 g Santotherm mit 2,29 g Surlyn 601 und 6,875g ®Aerosil R 972 (Degussa AG) gemischt.
Diese Mischung wird langsam zu der 210°C heißen, acetylierten Verbindung gegeben. Der Mischer wird mit 66 g Santotherm gespült und diese werden ebenfalls zum Reaktionsansatz gegeben.
In die gebildete Emulsion werden jetzt langsam in 3 Portionen 0,336 mol (96% der molaren Menge) oder 64,55 g Trimellitsäureanhydrid gegeben.

Die Temperatur wird unter möglichst starkem Rühren auf am Schluß 300°C erhöht. Dabei destilliert weitere Essigsäure. Gegen Reaktionsende wird 1h bei 300 °C kondensiert.
Nach Beendigung der Kondensation wird unter Rühren (mindestens bis Verfestigung der dispergierten Teilchen eingetreten ist) abgekühlt und der Reaktionsansatz filtriert, mit Toluol gewaschen (im Mixer) und getrocknet.

Man erhält 198,3 g eines gelben Polyamid-imid Pulvers vom Staudinger-Index 0,5 dl/g. Die mittlere Korngröße beträgt 35 µm. Der Glasübergang des Polymers liegt bei 256°C.

### Beispiel 4 (kristallines aromatisches Polyamid)

In einem 1l Dreihalskolben mit Stickstoffeinleitung, Rührer, Innenthermometer und Tropftrichter werden 34,95 g p-Aminobenzoesäure (0,255 mol) durch mehrmaliges Evakuieren und Wiederbelüften mit Stickstoff unter Stickstoffatmosphäre gesetzt. Der Kolbeninhalt wird aufgeschmolzen und bei ca. 140°C acetyliert durch Zutropfen von 0,255 mol (25 ml) Essigsäureanhydrid. Der Kolben enthält jetzt insgesamt 45,66 g der Acetylverbindung.

Während der Destillation werden 400 g Santotherm mit 4,66 g Bentone 38 (1% bezogen auf Öl) mit einem Dispergator gemischt. Nach 10 min werden 1,54 g (1,3 ml) Propylencarbonat (33 % bezogen auf Bentone 38) dazugegeben.

Diese Mischung wird langsam zu der 200°C heißen Schmelze von N-Acetyl-p-aminobenzoesäure gegeben. Der Mischer wird mit 66 g Santotherm gespült und diese werden ebenfalls zum Reaktionsansatz gegeben.
Die Temperatur wird unter möglichst starkem Rühren auf am Schluß 340°C erhöht. Bei dieser Temperatur wird 4 h kondensiert. Dabei destilliert weitere Essigsäure. Nach Beendigung der Kondensation wird unter Rühren abgekühlt und der Reaktionsansatz filtriert, mit Toluol gewaschen (im Mixer) und getrocknet.

Man erhält 30,1 g eines feinkörnigen, gelben Pulvers aus Poly-1.4-benzamid vom Staudinger-Index 0,8 dl/g. Die mittlere Korngröße beträgt 60 µm.

### Beispiel 5 (Polybenzimidazol)

65,2 g 3,3',4,4'-Tetraaminobiphenyl (0,304 mol) und 50,56 g Isophthalsäure (0,304 mol) werden eingewogen und der Reaktor durch mehrmaliges Evakuieren und Wiederbelüften mit Stickstoff unter Stickstoffatmosphäre gesetzt.
400 g ®Santotherm, 12 g ®Bentone 38 und 3,33 ml Propylencarbonat werden separat gemischt und die Mischung in den Reaktor gegeben. 3,77 g Triphenylphosphit werden als Katalysator zugegeben. Der Reaktor wird nochmals evakuiert und unter Stickstoffatmosphäre gesetzt. Die Temperatur wird auf 240°C erhöht, dort wird eine Stunde kondensiert (Wasserabspaltung).
Anschließend erhöht man die Temperatur auf 365°C und kondensiert bei dieser Temperatur weitere 4h.
Das nach Abkühlen durch Filtration isolierte und 2 mal mit Toluol gewaschene Polybenzimidazol liegt in Form eines feinen, gelben Pulvers mit einer mittleren Teilchengröße von 10µm vor und hat eine inhärente Viskosität (30°C, 0,5g/100 ml konzentrierte Schwefelsäure) von 0,65 dl/g.

## Patentansprüche

1. Verfahren zur Herstellung von stickstoffhaltigen Polymeren, wobei man mehrwertige Carbonsäuren und Diamine und/oder Aminocarbonsäuren oder deren reaktive Derivate in einem hochsiedenden inerten Lösungsmittel unter Zusatz einer temperaturbeständigen Dispergierhilfsmittels umsetzt, man dabei entstehende flüchtige Nebenprodukte abdestilliert, man nach Beendigung der Reaktion den Ansatz abkühlt und das entstehende Polymer abfiltriert, dadurch gekennzeichnet, daß man aromatische Ausgangsprodukte einsetzt.

2. Verfahren nach Anspruch 1, dadurch gekennzeichnet, daß man eine aromatische Dicarbonsäure oder deren reaktives Derivat mit einem aromatischen Diamin oder dessen N-Acetylderivat, gegebenenfalls unter Zusatz von aromatischen Aminocarbonsäuren umsetzt und das entstehende Polyamid isoliert.

3. Verfahren nach Anspruch 1, dadurch gekennzeichnet, daß man aromatische Aminocarbonsäuren oder deren Derivate umsetzt und das entstehende Polyamid isoliert.

4. Verfahren nach Anspruch 1, dadurch gekennzeichnet, daß man eine aromatische Tetracarbonsäure oder deren Anhydrid mit einem aromatischen Diamin oder dessen N-Acetylderivat umsetzt und man das entstehende Polyimid isoliert.

5. Verfahren nach Anspruch 1, dadurch gekennzeichnet, daß man ein aromatisches Tricarbonsäureanhydrid mit einem aromatischen Diamin oder dessen Acetylderivat umsetzt und man das entstehende Polyamidimid isoliert.

6. Verfahren nach Anspruch 1, dadurch gekennzeichnet, daß man eine aromatische Dicarbonsäure oder deren Phenylester mit einem aromatischen Tetraamin, gegebenenfalls unter Katalysatorzusatz, umsetzt und das entstehende Polybenzimidazol isoliert.

7. Verfahren nach Anspruch 1, dadurch gekennzeichnet, daß man ein N-Alkylpyrrolidon als Dispergierhilfsmittel zusetzt.
